(19) Europäisches Patentamt
European Patent Office
Office européen des brevets

(11) **EP 3 642 088 B1**

(12) **EUROPÄISCHE PATENTSCHRIFT**

(45) Veröffentlichungstag und Bekanntmachung des Hinweises auf die Patenterteilung:
**08.01.2025 Patentblatt 2025/02**

(21) Anmeldenummer: **18773358.9**

(22) Anmeldetag: **11.09.2018**

(51) Internationale Patentklassifikation (IPC):
***B60T 8/52*** *(2006.01)* ***B60T 13/74*** *(2006.01)*

(52) Gemeinsame Patentklassifikation (CPC):
**B60T 8/52; B60T 13/741;** F16D 2066/005

(86) Internationale Anmeldenummer:
**PCT/EP2018/074374**

(87) Internationale Veröffentlichungsnummer:
**WO 2019/063279 (04.04.2019 Gazette 2019/14)**

(54) **VERFAHREN ZUM ERMITTELN EINER BETRIEBSGRÖSSE EINER TROMMELBREMSE, TROMMELBREMSANORDNUNG, AUSWERTEVORRICHTUNG UND SPEICHERMEDIUM**

METHOD FOR ASCERTAINING AN OPERATING VARIABLE OF A DRUM BRAKE, DRUM BRAKE ASSEMBLY, ANALYSIS UNIT, AND STORAGE MEDIUM

PROCÉDÉ PERMETTANT DE DÉTERMINER UNE CARACTÉRISTIQUE DE FONCTIONNEMENT D'UN FREIN À TAMBOUR, SYSTÈME DE FREIN À TAMBOUR, DISPOSITIF D'ÉVALUATION ET SUPPORT D'ENREGISTREMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2017 DE 102017217413**

(43) Veröffentlichungstag der Anmeldung:
**29.04.2020 Patentblatt 2020/18**

(73) Patentinhaber: **Continental Automotive Technologies GmbH**
**30175 Hannover (DE)**

(72) Erfinder:
• **VEY, Christian**
**60488 Frankfurt am Main (DE)**
• **WINNER, Hermann**
**76467 Bietigheim (DE)**
• **HOFFMANN, Jens**
**60488 Frankfurt am Main (DE)**
• **KRUSE, Martin**
**60488 Frankfurt am Main (DE)**

• **PHILIPP, Christian**
**60488 Frankfurt am Main (DE)**
• **BACH, Uwe**
**60488 Frankfurt am Main (DE)**
• **VON HAYN, Holger**
**60488 Frankfurt am Main (DE)**
• **BÖHM, Jürgen**
**60488 Frankfurt am Main (DE)**
• **MARON, Christof**
**60488 Frankfurt am Main (DE)**

(74) Vertreter: **Continental Corporation**
**c/o Continental Automotive Technologies GmbH**
**Intellectual Property**
**Guerickestraße 7**
**60488 Frankfurt a. Main (DE)**

(56) Entgegenhaltungen:
**EP-A2- 0 221 299    EP-A2- 0 523 338**
**EP-A2- 1 095 834    WO-A1-2006/119837**
**DE-A1- 4 024 811    JP-A- H1 061 698**

**Beschreibung**

Trommelbremsanordnung und Speichermedium Die Erfindung betrifft ein Verfahren zum Ermitteln einer Betriebsgröße einer Trommelbremse Die Erfindung betrifft weiterhin eine zugehörige Trommelbremsanordnung, und ein zugehöriges Speichermedium.

Trommelbremsen werden häufig als Betriebsbremsen in Kraftfahrzeugen eingesetzt. Sie können auch eine Feststellbremsfunktion realisieren. Bei bekannten Trommelbremsen werden diese typischerweise hydraulisch durch einen Bremszylinder betätigt, welcher wiederum direkt von einem Bremspedal betätigt wird. Somit kann ein Fahrer des Kraftfahrzeugs durch Drücken des Bremspedals eine Bremswirkung erzielen.

Trommelbremsen können auch elektromechanisch ausgeführt werden, so dass diese unabhängig von einem hydraulischen Bremssystem wirken können. Dies kann beispielsweise für eine Bremsfunktion sinnvoll sein, welche von einer Fahrzeugelektronik direkt ausgelöst wird.

Beispielhafte Trommelbremsen sind in den Druckschriften WO 99/37935 A1, EP 988468 B1, US 4615419 und WO 2017/021114 A1 gezeigt. Bekannte Trommelbremsen werden typischerweise nicht darauf kontrolliert, ob diese die gewünschte Bremswirkung erzielen, d.h. ob ein gewünschtes Bremsmoment oder eine gewünschte Spannkraft erzeugt werden.

Die EP 1 095 834 A2 bezieht sich auf ein elektrisches dry-by-wire-Fahrzeugbremssystem mit elektrischem Betriebsbremssystem und elektrischem Feststellbremssystem aufweisend ein simulatorgestütztes Betriebsbremspedal sowie ein Feststellbremspedal zwecks Betätigung eines elektrischen Feststellbremsseilzugsystems inclusive zentralem Seilzugaktuator weiterhin umfassend elektromechanisch betätigbare Scheibenbremsen einer Fahrzeugvorderachse und elektromechanisch betätigbare Trommelbremsen einer Fahrzeughinterachse sowie umfassend ein elektonisches System zur Bremsmomentenregelung dergestalt dass für das Kraftfahrzeug das Zielbremsmoment eingeregelt wird.

Die DE 40 24 811 A1 bezieht sich auf ein elektrohydraulisch druckgeregeltes Kraftfahrzeugbremssystem und ein kraftgestütztes sowie elektrohydraulisch mit Ventilregelelektronik umgesetztes Bremsdruckregelverfahren mit Regelkreis anhand Ist-Sollwertvergleich, wobei mittels verbesserter elektrohydraulischer Druckregelung - insbesondere zur Vermeidung einer Überbremsung einzelner Radbremsen oder zwecks verbesserte Bremskraftverteilung - an allen Befestigungspunkten von Radbremsen die Lagerkraft gemessen wird, dass sodann der jeweilige Istwert der Bremskraft von dieser Lagerkraft abgeleitet wird, und zum Ist-Sollwertvergleich in der Regelelektronik herangezogen wird.

Die JP H10 61698 A bezieht sich auf eine Vorrichtung zur Ermittlung des Bremsmoments einer Trommelbremse anhand eines Bremskraftmesslagers. Es wird ein Ankerstift mit Dehnungsmessstreifen beschrieben. Zwecks Leitungsdurchführung ist ein Entnahmeloch 1A in den Ankerstift 1 gebohrt. Umfangsseitig umlaufend am Mittelteil des Ankerstifts ist eine Passnut 1B vorgesehen, in der ein Dehnungsmessstreifen 2 installiert ist. Dehnung des Dehnungsmessstreifens 2 infolge Bremslast verursacht eine Änderung des elektrischen Widerstands, was erfasst wird, um ein Bremsmoment abzuleiten. Wenn mehrere Dehnungsmessstreifen vorhanden sind, wird der Maximalwert, Durchschnittswert oder Minimalwert der Dehnung mit einem festen Wert multipliziert, um das Bremsmoment zu ermitteln.

Die EP 0 523 338 A2 betrifft ein Verfahren sowie eine Vorrichtung zum Steuern einer Bremsvorrichtung gegen Rückwärtsrollen eines Kraftfahrzeugs beim Anfahren am Berg, bei dem die Bremsvorrichtung jeweils erst dann gelöst wird, wenn das vom Motor/Getriebe aufgebrachte wirksame Antriebsmoment groß genug ist, um das Kraftfahrzeug auch bei gelöster Bremsvorrichtung am Rückwärtsrollen zu hindern. An bremskraftabstützenden Teilen des Fahrzeuges, vorzugsweise an Teilen der Bremsvorrichtung selbst oder an Teilen der Radaufhängung, sind Sensoren 10a, 10b zur Erfassung der Richtung der Bremskraftabstützung angeordnet, deren Sensorsignale einer elektronischen Steuer- und Regeleinrichtung (9) zugeführt werden, welche ein Steuersignal zum selbsttätigen Lösen der Bremsvorrichtung erzeugt, sobald sie aus den ihr zugeführten Sensorsignalen eine Richtungsumkehr der Bremskraftabstützung ermittelt hat.

Die WO 2006/119837 A1 beschreibt ein kraftgestütztes Verfahren, respektive eine Vorrichtung, mit wenigstens einer Fahrzeugradbremse zwecks Anfahrhilfe, wobei mittels eines Sensors die aktuell auf die Lagerstelle eines Aktuators oder Bremsorgans wirkende Kraft betrachtet wird, in Messsignale umgewandelt sowie zur weiteren Auswertung einer Steuerungs- und Regelungseinheit zugeleitet wird, um durch Steuerung bzw. Regelung des Aktuators anhand der Steuerungssignale ein automatisches Lösen der Radbremse auszuführen, sobald der Antriebsstrang des Kraftfahrzeugs genügend Drehmoment überträgt, um es in der augenblicklichen Position zu halten.

Es ist deshalb eine Aufgabe der Erfindung, ein neuartig verbessertes Verfahren zum Ermitteln einer Betriebsgröße einer Trommelbremse bereitzustellen, welches eine bessere Überwachung einer Trommelbremse erlaubt. Es ist des Weiteren eine Aufgabe der Erfindung, eine zugehörige Trommelbremsanordnung bereitzustellen, mit welcher ein solches Verfahren durchgeführt werden kann. Des Weiteren sind es Aufgaben der Erfindung ein zugehöriges Speichermedium bereitzustellen.

Dies wird erfindungsgemäß durch ein Verfahren, eine Trommelbremsanordnung und ein nichtflüchtiges computerlesbares Speichermedium gemäß den jeweiligen Hauptansprüchen erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein in dem unabhängigen Anspruch 1 definiertes Verfahren zum Ermitteln einer Betriebsgröße einer Trommelbremse.

Dadurch kann eine im Vergleich zur Verwendung von nur einer Lagerkraft noch bessere Berechnung des Bremsmoments erfolgen, welche in noch mehr Betriebssituationen dem tatsächlich ausgeübten Bremsmoment am nächsten kommt. Dies hat sich für typische Anwendungen als einfache und genaue Berechnungsvorschrift für das Bremsmoment erwiesen.

Unter einer auflaufenden Bremsbacke wird dabei typischerweise eine Bremsbacke verstanden, welche von einer sich drehenden Trommel der Trommelbremse in das Lager gedrückt wird. Unter einer ablaufenden Bremsbacke wird dabei typischerweise eine Bremsbacke verstanden, welche von der sich drehenden Trommel der Trommelbremse aus dem Lager herausgedrückt wird.

Gemäß der Erfindung wird die Lagerkraft an einer auflaufenden Bremsbacke der Trommelbremse gemessen, wobei das Bremsmoment vorzugsweise durch Multiplikation der Lagerkraft mit einem vorgegebenen Faktor berechnet wird. Hierdurch kann eine Abschätzung des Bremsmoments erreicht werden, welches in der Praxis für zahlreiche Anwendungen ausreichend ist.

Gemäß einer Ausführung ist der Betriebsparameter eine Spannkraft bei sich nicht drehender Trommel der Trommelbremse. Dadurch kann eine Spannkraft bei der Verwendung der Trommelbremse als Feststellbremse überwacht werden. Die Trommelbremse hält in diesem Fall also ein stehendes Fahrzeug im Ruhezustand.

Die Spannkraft kann dabei insbesondere durch Multiplikation der Lagerkraft mit einem vorgegebenen Faktor berechnet werden. Dies hat sich für typische Anwendungen als einfache und genaue Berechnungsvorschrift erwiesen.

Es sei verstanden, dass die hierin beschriebenen Ausführungen zur Berechnung einer Spannkraft und zur Berechnung eines Bremsmoments auch miteinander kombiniert werden können, so dass beispielsweise die Betriebsgröße ein Bremsmoment sein kann, wenn das Fahrzeug in Bewegung ist bzw. sich die Trommel der Trommelbremse dreht, und dass der Betriebsparameter eine Spannkraft ist, wenn das Fahrzeug nicht in Bewegung ist bzw. sich die Trommel der Trommelbremse nicht dreht.

Als Trommelbremse kann insbesondere eine elektromechanische Trommelbremse verwendet werden. Bei derartigen elektromechanischen Trommelbremsen kann eine hierin beschriebene Überwachung besonders vorteilhaft sein, da sie weitere Automatisierungen wie autonomes Fahren oder automatisches Bremsen ermöglicht.

Die Lagerkraft wird bevorzugt an einem Abstützlager der Bremsbacke gemessen. Die weitere Lagerkraft wird ebenso bevorzugt an einem weiteren Abstützlager der weiteren Bremsbacke gemessen. Dadurch kann die Lagerkraft bzw. die weitere Lagerkraft unmittelbar an jeweiligen Abstützlagern gemessen werden, wobei sich die Bremsbacken in den Abstützlagern an weiteren Teilen der Trommelbremse abstützen können.

Die Erfindung betrifft des Weiteren eine im Anspruch 7 definierte Trommelbremsanordnung.

Mittels der hierin beschriebenen Trommelbremsanordnung kann das erfindungsgemäße Verfahren in vorteilhafter Weise durchgeführt werden und es können die damit beschriebenen Vorteile erreicht werden.

Des Weiteren betrifft die Erfindung ein im Anspruch 9 definiertes nichtflüchtiges computerlesbares Speichermedium, welches Programmcode enthält, bei dessen Ausführung ein Prozessor ein erfindungsgemäßes Verfahren ausführt. Hinsichtlich des erfindungsgemäßen Verfahrens kann dabei jeweils auf alle hierin beschriebenen Ausführungen und Varianten zurückgegriffen werden.

Ein erzeugter Betriebsparameter, beispielsweise eine Spannkraft oder ein Bremsmoment, kann beispielsweise zur Regelung der Trommelbremse verwendet werden.

Weitere Merkmale und Vorteile wird der Fachmann dem nachfolgend mit Bezug auf die beigefügte Zeichnung beschriebenen Ausführungsbeispiel entnehmen. Dabei zeigen:

Fig. 1:     eine elektromechanische Trommelbremse,

Fig. 2:     einen Zusammenhang zwischen Bremsmoment und Kraftdifferenz,

Fig. 3:     einen Zusammenhang zwischen Bremsmoment und einer Kraft an einem Abstützlager und

Fig. 4:     einen Zusammenhang zwischen einer Spannkraft und einer Kraft an einem Abstützlager.

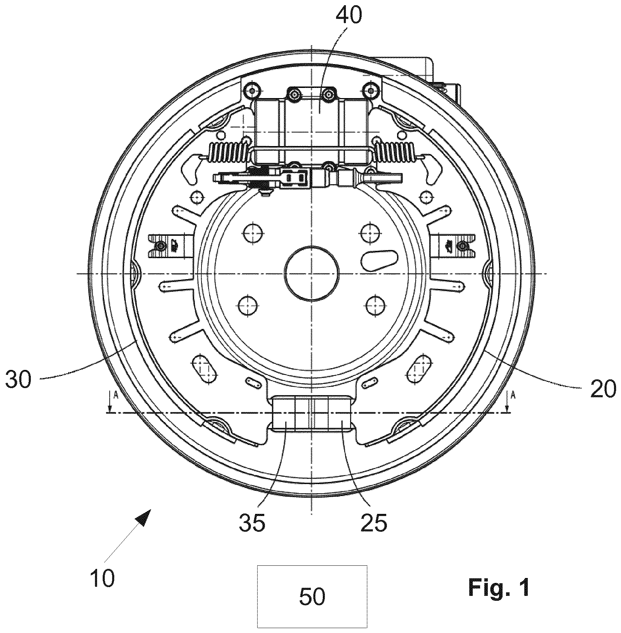

Fig. 1 zeigt eine Trommelbremsanordnung 10 mit einer elektromechanischen Trommelbremse in einer schematischen Darstellung, wobei die Trommel nicht dargestellt ist.

Die in Fig. 1 dargestellte Trommelbremsanordnung 10 weist eine erste Bremsbacke 20 und eine zweite Bremsbacke 30 auf. Die nicht dargestellte Trommel einer Trommelbremse umgibt typischerweise die Bremsbacken 20, 30. Die erste Bremsbacke 20 ist in einem ersten Abstützlager 25 abgestützt. Dieses enthält einen nicht separat dargestellten ersten Kraftsensor. Die zweite Bremsbacke 30 ist in einem zweiten Abstützlager 35 abgestützt. Dieses enthält einen nicht separat dargestellten zweiten Kraftsensor.

Zwischen den beiden Bremsbacken 20, 30 ist an der oberen Seite der Trommelbremse eine Spreizeinheit 40 angeordnet. Dabei handelt es sich vorliegend um eine elektromechanische Spreizeinheit 40. Diese kann die beiden Bremsbacken 20, 30 auseinanderdrücken, so dass diese an eine umgebende Trommel anstoßen und die Trommel, sofern sie sich dreht, abbremsen. Sofern sich die Trommel nicht dreht, können die Bremsbacken eine Haltekraft ausüben. Somit kann die Trommelbremse 10 sowohl als Betriebsbremse wie auch als Feststellbremse verwendet werden.

Wenn die Spreizeinheit 40 die beiden Bremsbacken 20, 30 gegen die Trommelinnenseite drückt, stützen diese sich mit Reaktionskräften an den Abstützlagern 25, 35 ab. Dort werden die dadurch entstehenden Kräfte gemessen.

Die Trommelbremsanordnung 10 weist eine Auswertevorrichtung 50 gemäß einem Ausführungsbeispiel der Erfindung auf. Diese ist zur Ausführung eines Verfahrens gemäß einem Ausführungsbeispiel der Erfindung konfiguriert. Dabei werden die eben erwähnten gemessenen Kräfte weiterverarbeitet.

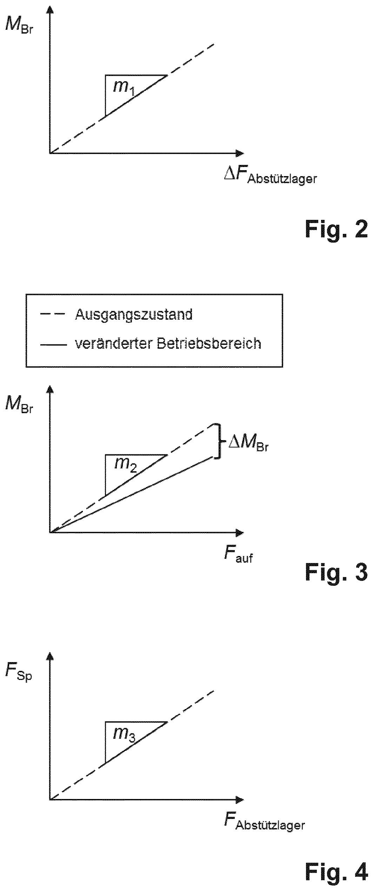

Nachfolgend wird mit Bezug auf die Fig. 2 bis 4 beschrieben, wie die gemessenen Kräfte ausgewertet werden können.

Fig. 2 zeigt eine Variante, in welcher ein Bremsmoment basierend auf einer Kraftdifferenz berechnet wird. Es hat sich dabei gezeigt, dass eine Differenzbildung der Lagerkräfte von auflaufender und ablaufender Bremsbacke 20, 30 ein geeignetes Kriterium ist. Beispielsweise kann bei einer sich im Uhrzeigersinn drehenden Trommel (in der Darstellung von Fig. 1) die erste Bremsbacke 20 eine auflaufende Bremsbacke sein und die zweite Bremsbacke 30 eine ablaufende Bremsbacke sein. Der Zusammenhang zwischen Bremsmoment und Kräftedifferenz zwischen einer Kraft $F_{auf}$ der auflaufenden Bremsbacke und einer Kraft $F_{abl}$ der ablaufenden Bremsbacke ist dabei proportional mit einem Proportionalitätsfaktor $m_1$. Das Bremsmoment $M_{Br}$ als Betriebsgröße berechnet sich somit nach folgender Formel:

$$M_{Br} = (F_{auf} - F_{abl}) \cdot m_1 = \Delta F_{Abstützlager} \cdot m_1$$

Dabei wurde die Kraftdifferenz als $\Delta F_{Abstützlager}$ bezeichnet.

Das Bremsmoment und die Lagerkräfte weisen eine Abhängigkeit von variablen Randbedingungen wie beispielsweise Temperatur, Drehzahl oder Reibwert der Bremse auf. Beispielsweise werden bei gleicher Betätigungskraft mit steigender Temperatur das Bremsmoment und die Kräfte am Abstützlager reduziert. Das Verhältnis zwischen Bremsmoment und Kräftedifferenz bleibt dabei jedoch näherungsweise konstant. Damit ist das Kriterium zur Bestimmung des Bremsmoments unabhängig von den variablen Randbedingungen und bietet für verschiedene Betriebsbereiche eine hohe Genauigkeit.

In Fig. 3 ist eine weitere, einfachere Möglichkeit zur Bestimmung eines Bremsmoments dargestellt. Auch dies erfolgt im Betriebsfall einer sich drehenden Trommel. Dabei wird jedoch ausschließlich die Abstützkraft $F_{auf}$ einer auflaufenden Bremsbacke verwendet. Diese wird im Vergleich zur ablaufenden Bremsbacke wesentlich stärker betätigt. Der Zusammenhang wird über einen Proportionalitätsfaktor $m_2$ hergestellt:

$$M_{Br} = F_{auf} \cdot m_2$$

Diese Variante weist im Gegensatz zur Differenzbildung der Kräfte eine Abhängigkeit von den variablen Randbedingungen auf. Damit entsteht eine Abweichung $\Delta M_{Br}$ gegenüber dem konstanten Proportionalitätsfaktor $m_2$. Somit weist dieser Zusammenhang im Vergleich zur Variante 1 eine geringere Genauigkeit über die verschiedenen Betriebsbereiche auf, ist jedoch dafür einfacher zu berechnen. Die zu erwartende Abweichung ist schematisch in Fig. 3 dargestellt, und zwar in Form von separaten Kennlinien für den Ausgangszustand, welcher mittels des Proportionalitätsfaktors $m_2$ berechnet wird, und dem veränderten Betriebsbereich.

Fig. 4 zeigt eine Ausführung zur Ermittlung einer Spannkraft im Fall einer momentenfreien stehenden Trommel. Dies ist beispielsweise beim Parken in der Ebene der Fall. Dabei liegt ein proportionaler Zusammenhang zwischen einer Kraft $F_{Abstützlager}$ am Abstützlager und der Spannkraft $F_{Sp}$ vor. Die Kräfte an den Abstützlagern 25, 35 der beiden Bremsbacken 20, 30 sind in diesem Betriebsfall identisch. Über den Proportionalitätsfaktor $m_3$ wird der Zusammenhang zwischen der Spannkraft $M_{Sp}$ und den Kräften an den Abstützlagern 25, 35 beschrieben:

$$F_{Sp} = F_{Abstützlager} \cdot m_3$$

Dieser Zusammenhang ist in Fig. 4 dargestellt.

Mittels der erfindungsgemäßen Vorgehensweise ist ein bremsmomentbasiertes Regelkonzept für eine Betriebsbremse realisierbar. Ein Schiefziehen aufgrund von Bremsmomentdifferenzen kann vermieden werden. Auch für eine Feststellbremse ist ein spannkraftbasiertes Regelkonzept realisierbar.

Die hier beschriebenen Vorgehensweisen können insbesondere für eine Simplexbremse verwendet werden, beispielsweise über eine Kraftmessung am Abstützlager.

Erwähnte Schritte des erfindungsgemäßen Verfahrens können in der angegebenen Reihenfolge ausgeführt werden. Sie können jedoch auch in einer anderen Reihenfolge ausgeführt werden. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

**Patentansprüche**

1. Verfahren zum Ermitteln einer Betriebsgröße einer Trommelbremse, welches folgende Schritte aufweist:

   - Aufnehmen einer Lagerkraft einer Bremsbacke (20, 30) der Trommelbremse mittels eines Sensors, und
   - Berechnen der Betriebsgröße basierend auf der Lagerkraft,
   - wobei die Betriebsgröße ein Bremsmoment ($M_{Br}$) bei sich drehender Trommel der Trommelbremse ist, **dadurch gekennzeichnet, dass** die Lagerkraft ($F_{auf}$) an einer auflaufenden Bremsbacke (20) der Trommelbremse gemessen wird,
   - wobei eine weitere Lagerkraft ($F_{abl}$) an einer ablaufenden Bremsbacke (30) der Trommelbremse gemessen wird,
   - wobei das Bremsmoment ($M_{Br}$) basierend auf der Lagerkraft ($F_{auf}$) und der weiteren Lagerkraft ($F_{abl}$) berechnet wird, indem
   - das Bremsmoment ($M_{Br}$) als Differenz zwischen der Lagerkraft ($F_{auf}$) und der weiteren Lagerkraft ($F_{abl}$), wobei die Differenz mit einem vorgegebenen Faktor ($m_1$) multipliziert wird, berechnet wird.

2. Verfahren nach Anspruch 1,

   - wobei die Lagerkraft ($F_{auf}$) an einer auflaufenden Bremsbacke (20) der Trommelbremse gemessen wird, und
   - wobei das Bremsmoment ($M_{Br}$) durch Multiplikation der Lagerkraft ($F_{auf}$) mit einem vorgegebenen Faktor ($m_2$) berechnet wird.

3. Verfahren nach Anspruch 1,

   - wobei der Betriebsparameter eine Spannkraft ($F_{Sp}$) bei sich nicht drehender Trommel der Trommelbremse ist.

4. Verfahren nach Anspruch 3,

   - wobei die Spannkraft ($F_{Sp}$) durch Multiplikation der Lagerkraft ($F_{auf}$) mit einem vorgegebenen Faktor ($m_3$) berechnet wird.

5. Verfahren nach einem der vorhergehenden Ansprüche,

   - wobei als Trommelbremse eine elektromechanische Trommelbremse verwendet wird.

6. Verfahren nach einem der vorhergehenden Ansprüche,

   - wobei die Lagerkraft ($F_{auf}$) an einem Abstützlager (25) der Bremsbacke (20) gemessen wird, und
   - wobei die weitere Lagerkraft ($F_{abl}$) an einem weiteren Abstützlager (35) der weiteren Bremsbacke (30) gemessen wird.

7. Trommelbremsanordnung (10), aufweisend

- zumindest eine Bremsbacke (20),
- zumindest ein Abstützlager (25),
- zumindest einen Kraftsensor am Abstützlager (25) zur Messung einer von der Bremsbacke (20) im Abstützlager (25) erzeugten Lagerkraft, ferner aufweisend
- zumindest einen weiteren Bremsbacken (30),
- zumindest ein weiteres Abstützlager (35),
- zumindest einen weiteren Kraftsensor am weiteren Abstützlager (35) zur Messung einer von der weiteren Bremsbacke (30) im weiteren Abstützlager (35) erzeugten weiteren Lagerkraft, und
- eine Auswertevorrichtung (50),
- **dadurch gekennzeichnet, dass** die Auswertevorrichtung (50) dazu konfiguriert ist, ein Verfahren nach Anspruch 1 oder einem davon abhängigen Anspruch auszuführen.

8. Trommelbremsanordnung nach Anspruch 7, **dadurch gekennzeichnet, dass** eine elektromechanische Spreizeinheit (40) vorgesehen ist.

9. Nichtflüchtiges computerlesbares Speichermedium, welches Programmcode enthält, bei dessen Ausführung ein Prozessor ein Verfahren nach einem der Ansprüche 1 bis 6 ausführt.

**Claims**

1. Method for ascertaining an operating variable of a drum brake, said method having the following steps:

   - recording a bearing force of a brake shoe (20, 30) of the drum brake by means of a sensor, and
   - calculating the operating variable based on the bearing force,
   - wherein the operating variable is a braking torque ($M_{Br}$) while the drum of the drum brake is rotating, **characterized in that** the bearing force ($F_{auf}$) is measured at a leading brake shoe (20) of the drum brake,
   - wherein a further bearing force ($F_{abl}$) is measured at a trailing brake shoe (30) of the drum brake,
   - wherein the braking torque ($M_{Br}$) is calculated based on the bearing force ($F_{auf}$) and the further bearing force ($F_{abl}$) by way of
   - the braking torque ($M_{Br}$) being calculated as a difference between the bearing force ($F_{auf}$) and the further bearing force ($F_{abl}$), wherein the difference is multiplied by a predetermined factor ($m_1$).

2. Method according to Claim 1,

   - wherein the bearing force ($F_{auf}$) is measured at a leading brake shoe (20) of the drum brake, and
   - wherein the braking torque ($M_{Br}$) is calculated by multiplying the bearing force ($F_{auf}$) by a predetermined factor (m2).

3. Method according to Claim 1,

   - wherein the operating parameter is an application force ($F_{Sp}$) while the drum of the drum brake is not rotating.

4. Method according to Claim 3,

   - wherein the application force ($F_{Sp}$) is calculated by multiplying the bearing force ($F_{auf}$) by a predetermined factor (m3).

5. Method according to any one of the preceding claims,

   - wherein an electromechanical drum brake is used as the drum brake.

6. Method according to any one of the preceding claims,

   - wherein the bearing force ($F_{auf}$) is measured at a supporting bearing (25) of the brake shoe (20), and
   - wherein the further bearing force ($F_{abl}$) is measured at a further supporting bearing (35) of the further brake shoe (30).

7. Drum brake assembly (10), having

   - at least one brake shoe (20),
   - at least one supporting bearing (25),
   - at least one force sensor on the supporting bearing (25) for measuring a bearing force produced in the supporting bearing (25) by the brake shoe (20), further having
   - at least one further brake shoe (30),
   - at least one further supporting bearing (35),
   - at least one further force sensor on the further supporting bearing (35) for measuring a further bearing force produced in the further supporting bearing (35) by the further brake shoe (30), and
   - an analysis unit (50),
   - **characterized in that**

   the analysis unit (50) is configured to execute a method according to Claim 1 or according to a claim dependent thereon.

8. Drum brake assembly according to Claim 7, **characterized in that** an electromechanical spreading unit (40) is provided.

9. Non-volatile, computer-readable storage medium, containing program code, during the execution of which a processor executes a method according to any one of Claims 1 to 6.

**Revendications**

1. Procédé permettant de déterminer une grandeur de fonctionnement d'un frein à tambour, présentant les étapes suivantes consistant à :

   - capter une force de palier d'une mâchoire de frein (20, 30) du frein à tambour au moyen d'un capteur, et
   - calculer la grandeur de fonctionnement sur la base de la force de palier,
   - dans lequel la grandeur de fonctionnement est un couple de freinage ($M_{Br}$) lorsque le tambour du frein à tambour tourne, **caractérisé en ce que** la force de palier ($F_{auf}$) est mesurée sur une mâchoire de frein menante (20) du frein à tambour,
   - dans lequel une force de palier supplémentaire ($F_{abl}$) est mesurée sur une mâchoire de frein menée (30) du frein à tambour,
   - dans lequel le couple de freinage ($M_{Br}$) est calculé sur la base de la force de palier ($F_{auf}$) et de la force de palier supplémentaire ($F_{abl}$) **en ce que**
   - le couple de freinage ($M_{Br}$) est calculé comme la différence entre la force de palier ($F_{auf}$) et la force de palier supplémentaire ($F_{abl}$), la différence étant multipliée par un facteur prédéfini ($m_1$).

2. Procédé selon la revendication 1,

   - dans lequel la force de palier ($F_{auf}$) est mesurée sur une mâchoire de frein menante (20) du frein à tambour, et
   - dans lequel le couple de freinage ($M_{Br}$) est calculé en multipliant la force de palier ($F_{auf}$) par un facteur prédéfini (m2).

3. Procédé selon la revendication 1,

   - dans lequel le paramètre de fonctionnement est une force de tension ($F_{Sp}$) lorsque le tambour du frein à tambour tourne.

4. Procédé selon la revendication 3,

   - dans lequel la force de tension ($F_{Sp}$) est calculée en multipliant la force de palier ($F_{auf}$) par un facteur prédéfini (m3).

5. Procédé selon l'une quelconque des revendications précédentes,

- dans lequel un frein à tambour électromécanique est utilisé en tant que frein à tambour.

6. Procédé selon l'une quelconque des revendications précédentes,

- dans lequel la force de palier ($F_{auf}$) est mesurée sur un palier d'appui (25) de la mâchoire de frein (20), et
- dans lequel la force de palier supplémentaire ($F_{abl}$) est mesurée sur un palier d'appui supplémentaire (35) de la mâchoire de frein supplémentaire (30).

7. Agencement de frein à tambour (10), présentant

- au moins une mâchoire de frein (20),
- au moins un palier d'appui (25),
- au moins un capteur de force sur le palier d'appui (25) pour mesurer une force de palier produite par la mâchoire de frein (20) dans le palier d'appui (25), présentant en outre
- au moins une mâchoire de frein supplémentaire (30),
- au moins un palier d'appui supplémentaire (35),
- au moins un capteur de force supplémentaire sur le palier d'appui supplémentaire (35) pour mesurer une force de palier supplémentaire produite par la mâchoire de frein supplémentaire (30) dans le palier d'appui supplémentaire (35), et
- un dispositif d'évaluation (50),
- **caractérisé en ce que**

le dispositif d'évaluation (50) est configuré pour exécuter un procédé selon la revendication 1 ou une revendication qui en dépend.

8. Agencement de tambour à frein selon la revendication 7, **caractérisé en ce qu'**une unité d'écartement électromécanique (40) est prévue.

9. Support de stockage non volatile lisible par ordinateur, qui contient du code programme lors de l'exécution duquel un processeur exécute un procédé selon l'une quelconque des revendications 1 à 6.

Fig. 1

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9937935 A1
- EP 988468 B1
- US 4615419 A
- WO 2017021114 A1
- EP 1095834 A2
- DE 4024811 A1
- JP H1061698 A
- EP 0523338 A2
- WO 2006119837 A1